## Europäisches Patentamt

## European Patent Office

(19)

## Office européen des brevets

(11) Publication number: **0 152 408**

**B1**

(12) **EUROPEAN PATENT SPECIFICATION**

(45) Date of publication of patent specification: **16.12.87**

(51) Int. Cl.⁴: **F 16 L 55/16, F 16 L 11/10, E 03 F 3/06**

(21) Application number: **84902317.1**

(22) Date of filing: **31.05.84**

(86) International application number: **PCT/US84/00836**

(87) International publication number: **WO 85/00870 28.02.85 Gazette 85/05**

(54) **METHOD OF DEPOSITING A MEMBRANE WITHIN A CONDUIT.**

(30) Priority: **03.08.83 US 519939**

(43) Date of publication of application: **28.08.85 Bulletin 85/35**

(45) Publication of the grant of the patent: **16.12.87 Bulletin 87/51**

(84) Designated Contracting States: **AT BE CH DE FR GB LI LU NL SE**

(56) References cited:
**DE-A-2 832 763**
**US-A-2 300 057**
**US-A-2 329 286**
**US-A-3 141 480**

(73) Proprietor: **OWENS-CORNING FIBERGLAS CORPORATION Fiberglas Tower 26 Toledo, Ohio 43659 (US)**

(72) Inventor: **KANE, John, Leo 446 Reverie Place Newark, OH 43055 (US)** Inventor: **MACHLAN, George, Richard 205 Gladys Avenue Newark, OH 43055 (US)**

(74) Representative: **Chameroy, Claude et al c/o Cabinet Malemont 42 avenue du Président Wilson F-75116 Paris (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Technical Field

This invention relates to a method of repairing a conduit having a damaged section in the form of holes, cracks and the like.

### Background art

Damage of conduits is well known. It frequently occurs that such damage takes place in conduits which are not easily accessible because of location. Such a conduit, for example, can be located underground as is a sewer line. The method of this invention is directed to facilitating such repair.

A method is known from US—A—2 300 057 for reinforcing the coupled ends of two lengths of hose, but this method is not convenient for repairing holes or cracks in a conduit.

### Disclosure of invention

According to this invention, there is provided a method comprising the following steps:

a) torsionally loading a coiled member to longitudinally expand said member to a diameter less than the diameter of said conduit;

b) positioning a flexible sleeve over said member;

c) inserting said longitudinally expanded coiled member into said conduit at said damaged section;

d) releasing said load to cause said member to expand radially to force the sleeve into contact with said conduit at said damaged section; and,

e) leaving said radially expanded member in said conduit to form a repair of said damaged section.

### Brief description of drawings

Figure 1 is a view of one embodiment of a coiled member suitable for use in the method of this invention.

Figure 2 is a view of one embodiment of a carrier means employable to insert the coiled member in the conduit; and,

Figure 3 is a view of the coiled member positioned on the carrier means.

Figure 4 is a cross-sectional view through section 4—4 of Figure 2.

### Best mode of carrying out invention

The method of this invention will be described in terms of employment of the embodiments of the figures.

The method of this invention is employable in any size conduit employed for any purpose. It is particularly suitable for use in conduit of from about 50.8 mm to about 381. mm (2 to about 15 inches) in diameter which conduit is inaccessible, such as a sewer line, but which conduit has an access opening thereinto.

Any suitable coiled member, or spring, can be employed. One particularly suitable coiled member is made of fiberglass reinforced resin formed with a spiral slice.

Suitable coiled members can be made from FRP (fibrous glass reinforced plastic) pipe using, for example, A. O. Smith Red Thread FRP or Grenn Thread glass fiber reinforce epoxy pipe. Such a member will comprise a continuous coiled flat band of any suitable length, will have a band width of from about 25.4 mm to about 254. mm (1 to about 10 inches) and a coil thickness of from about 2.54 mm to about 12.7 mm (0.100 to about 0.500 inch).

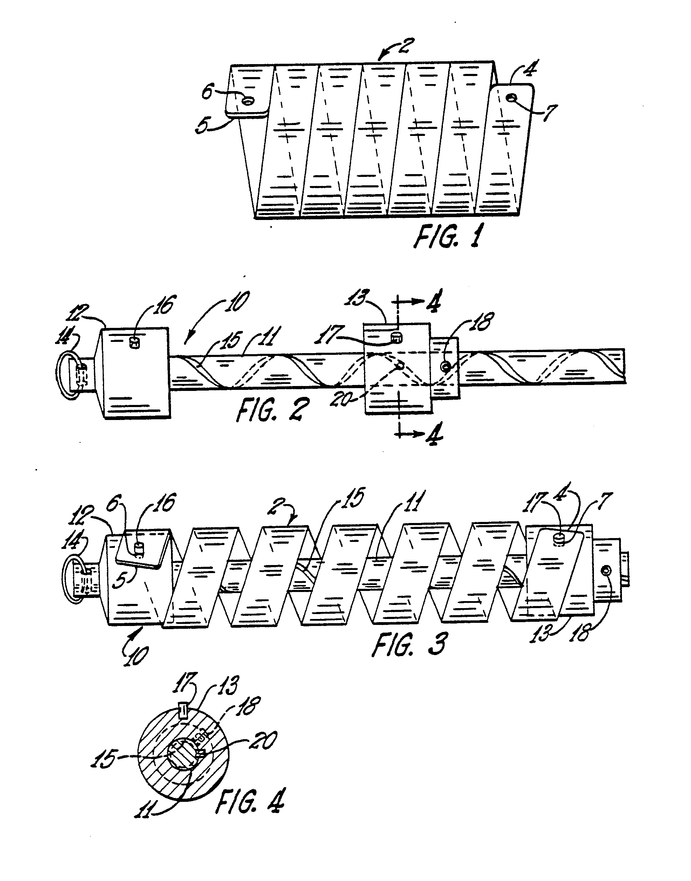

As shown in Figure 1, the coiled member will have terminals 4 and 5 in which are positioned openings 6 and 7, respectively. The coiled member can have either a right or left hand pitch. The flat sections are preferably rectangular.

The coiled member will have a diameter in its relaxed position greater than the internal diameter of the conduit into which it is to be inserted. The coiled member is introduced into the conduit in a torsionally loaded, or twisted and elongated condition, from which condition it is released after positioning a flexible sleeve and after insertion to expand outwardly and to exert a pressure against the flexible sleeve and the internal wall of the conduit.

The coiled member can be designed to exert an desired pressure P according to the formula:

$$P = \frac{Eh^3\ \phi}{24r^3r_o}$$

wherein:

$E$ = modulus of elasticity of the material from which the coiled member is fabricated;

$h$ = thickness of the flat section of the coiled member;

$r_o$ = the outer radius of the coiled member in the unstrained state;

$r$ = the outer radius of the coiled member in the torsionally loaded state;

$\phi = (r_o - r)$ = the extent of deformation (bending) of the coiled member.

To illustrate, assume a coiled member spirally cut from FRP pipe and encased in a 2.38125 mm (0.09375 inch) elastomeric membrane as hereinafter discussed. Assume insertion in a 10.16 mm (4 inch) internal diameter conduit. The coiled member will have a strained radius of 48.4124 mm (1.906 inches) and, assuming a section thickness of the coiled member as 2.794 mm (0.110 inch) and a tensile modulus of $2.07 \times 10^{10}$ pascals ($3 \times 10^6$ psi), the pressure which will be exerted against the sleeve and the inner wall of the pipe will be $1.29 \times 10^5$ pascals (4.03 psig).

The coiled member can be of any suitable thickness. Coiled members which develop about $6.9 \times 10^4$ pascals (10 psi) against the sleeve and the internal wall of the pipe are generally satisfactory.

The coiled member can be positioned within the conduit in any suitable manner. One carrier, or insertion device is shown in Figure 2.

Referring to Figure 2 there in shown device 10 comprising rod 11, fixed bushing 12 and movable bushing 13.

Rod 11 has at its one end attachment means, for example, a ring 14 affixed thereto. While bushing 12 is fixed, bushing 13 is free to rotate and move longitudinally along rod 11 in helix 15. Each of bushings 12 and 13 have studs 16 and 17, respectively, positioned therein. Bushing 13 is also adapted with set screw 18 for fixedly positing the free bushing along the length of the rod as described hereinafter. The pitch of the helix 15 on rod 11 substantially equal to that of the coiled member in order to obtain the correct dynamic behavior of the coiled member upon release as hereinafter described.

As shown in Figure 4, bushing 13 has a downward projection 20 such that when bushing 13 moves towards bushing 12 as hereinafter described bushing 13 rotates helically.

The coiled member is encompassed with a sleeve such that upon placement of the combination within the conduit, the sleeve is positioned between the coiled member and the inner conduit wall. While the sleeve can be comprised of any suitable material, it will preferably be comprised of a flexible material such as vulcanized butyl rubber or any material inert to the material transported in the conduit.

Referring now to Figure 3, there is illustrated the positioning of the coiled member on the insertion device. The coiled member 2 is slipped over the insertion device 10 with openings 6 and 7 positioned on studs 16 and 17. The free bushing 13 is then rotated outwardly along the length of the rod 11 and away from bushing 12, thus producing a simultaneous decrease in diameter and increase in length of the coiled member.

When the coiled member is sufficiently decreased in diameter as to permit the combination to be inserted in the sleeve and the conduit, the free bushing 13 is locked into position in the twisted coil state by lock-release mechanism, or set screw 18. The sleeve 21 is placed over any portion of the twisted coil member and the entire mechanism is placed in the conduit.

The mechanism can be positioned in the conduit by pulling it thereinto by means affixed to ring 14. When positioned as desired as determined by any suitable means, ths lock-release mechanism on bushing 13 is released. The freed bushing then moves towards the fixed bushing, the coiled member untwists and expands outward into a position of compression against the sleeve and the wall of the conduit. At the same time, momentum carries the slots 6 and 7 off of studs 16 and 17, with the sleeve positioned between the coiled member and the inner wall of the pipe.

The insertion device is then withdrawn leaving the coiled member in outward compression to force the sleeve in sealing arrangement against any defect which may have been present in the conduit.

Industrial applicability

This invention is applicable to the repair of underground conduit such as sewerlines, pipelines and the like.

## Claims

1. A method of repairing a conduit having a damaged section in the form of holes, cracks and the like, characterized in that it comprises the following steps:

a) torsionally loading a coiled member to longitudinally expand said member to a diameter less than the diameter of said conduit;

b) positioning a flexible sleeve over said member;

c) inserting said longitudinally expanded coiled member into said conduit at said damaged section;

d) releasing said load to cause said member to expand radially to force the sleeve into contact with said conduit at said damaged section; and,

e) leaving said radially expanded member in said conduit to form a repair of said damaged section.

2. The method of claim 1 in which said member is comprised of fiberglass reinforced plastic.

3. The method of claim 1 in which said member comprises a coiled flat band.

4. The method of claim 1 in which said coiled member upon expansion exerts a force of about $6.9 \times 10^4$ pascals (10 psi) against the internal wall of said conduit.

## Patentansprüche

1. Verfahren zum Reparieren von Leitungen, die im Leitungsverlauf Löcher, Brüche oder dgl. aufwesen, dadurch gekennzeichnet, Daß folgende Verfahrensschritte vorgesehen sind:

a) ein spiralförmiges, sich in Längsrichtung erstreckendes Teil wird in sich zusammengedreht, und zwar zu einem Durchmesser der kleiner ist als der Durchmesser der genannten Leitung;

b) über dem Teil wird eine flexible Manschete angeordnet;

c) das sich in Längsrichtung erstreckende spiralförmige Teil wird in die Leitung, an dem Bereich der schadhaften Stelle, eingeschoben;

d) die Verdrehung wird gelöst, um dem Teil eine Ausdehnung in radialer Richtung zu ermöglichen, wobei die Manschette zum Anliegen an der schadhaften Stelle innerhalb der Leitung gezwungen wird; und,

e) das in radialer Richtung ausgedehnte Teil wird in der Leitung belassen, umderart die schadhafte Stelle instandzusetzen.

2. Verfahren nach Anspruch 1, dadurch gekennzeichnet, daß das Teil aus mit Fiberglas verstärktem Plastikmaterial besteht.

3. Verfahren nach Anspruch 1, dadurch gekennzeichnet, daß das Teil aus einem spiralförmigen flachen Band besteht.

4. Verfahren nach Anspruch 1, dadurch gekennzeichnet, daß das spiralförmige Teil bei seiner Ausdehnung eine Kraft von etwa $6, \times 10^4$ pascal (10 psi) gegen die Innenseite der Leitung entwikkelt.

## Revendications

1. Procédé pour réparer un condiuit qui présente une portion détériorée sous la forme de trous, de fissures et de défauts similaires, caractérisé en ce qu'il comporte les étapes suivantes qui consistent à:

a) soumettre à une contrainte de torsion un organe enroulé pour étirer ledit organe longitudinalement, afin qu'il ait un diamètre inférieur au diamètre dudit conduit;

b) positionner un manchon flexible sur ledit organe;

c) insérer ledit organe enroulé, étiré longitudinalement, dans ledit conduit au niveau de ladite portion détériorée;

d) relâcher ladite contrainte pour obliger ledit organe à se détendre radialement, afin d'amener par force le manchon en contact avec ledit conduit au niveau de ladite portion détériorée; et

e) laisser ledit organe détendu radialement dans ledit conduit pour former une réparation de ladite portion détériorée.

2. Procédé de la revendication 1, dans lequel ledit organe est composé d'une matière plastique renforcée par des fibres de verre.

3. Procédé de la revendication 1, dans lequel ledit organe se compose d'une bande plane enroulée.

4. Procédé de la revendication 1, dans lequel ledit organe enroulé exerce, lors de sa détente, une force égale à environ 6,9×10 pascals (10 psi) contre la paroi interne dudit conduit.

FIG. 1

FIG. 2

FIG. 3

FIG. 4